# EUROPEAN PATENT APPLICATION

(11) **EP 2 671 444 A1**
(43) Date of publication of application: **11.12.2013**
(21) Application number: 13002808.7
(22) Date of filing: 31.05.2013
(51) Int. Cl.: A01F 15/14

(54) **Blower arrangement and baler with such**

(30) Priority: 07.06.2012 US 201213490917
(71) Applicant: DEERE & COMPANY, Moline, Illinois 61265-8098 (US)
(72) Inventor: Darin, L Roth, Batavia, IA 52533 (US)
(74) Representative: Reichert, Christian

(57) **Abstract**

A blower arrangement (22) for an agricultural baler (10) is disclosed. The blower arrangement (22), comprising: a housing (24) and a plurality of axially aligned centrifugal fans (26) positioned within said housing (24), said housing (24) including separate adjacent outlets (32) respectively associated with each of said fans (26). In order to improve the efficiency of a blower arrangement it is proposed that each of said adjacent outlets (32) being configured for directing a respective portion of an outlet flow toward at least one knotter assembly (30), and said housing (24) also including at least one additional outlet configured for directing a remaining portion of the outlet flow toward a different part of a baler (10). Furthermore, a baler (10) with said blower arrangement (22) is disclosed.

## Description

The present invention relates a blower arrangement (22) for an agricultural baler (10), comprising a housing (24) and a plurality of axially aligned centrifugal fans (26) positioned within said housing (24), said housing (24) including separate adjacent outlets (32) respectively associated with each of said fans (26), each of said adjacent outlets (32) being configured for directing a respective portion of an outlet flow toward at least one knotter assembly. Furthermore, the invention is directed to a baler (10) comprising such blower arrangement (22).

A cut and raked crop that has been dried or otherwise prepared in a field, such as hay, straw or other agricultural material is often gathered, compressed, and shaped by an agricultural baler. There are several types of balers that are commonly used, each resulting in different types of bales. Some are rectangular and some are cylindrical of various sizes. Bales can be bound with netting, strapping, wire, or traditionally twine. A baler that produces small rectangular bales, often called square bales, often produces bales that are typically wrapped with two strands of knotted twine. The bales are light enough for easy handling and typically weigh from 40 to 80 pounds. A bale is formed by a series of processes performed by the square baler including lifting the windrowed material, hereinafter referred to as hay, by way of the pickup portion of the baler. The hay is then moved by way of an auger into a chamber that has a sliding plunger with a cutting edge that cuts the hay and moves the hay in the chamber into previously packed hay therein causing the hay to be compressed. Once a predetermined amount of hay has been gathered in the chamber, as measured by the amount being extruded through the opening at the rear of the chamber, a mechanism is triggered causing the twine to be threaded through the hay, cut and then knotted thereby forming the bale and one portion of the twine is retained to start to receive hay for the next bale. As bales are moved through the compression channel out to the rear of the baler, the baled hay is then either loaded onto a wagon or dropped into the field for later retrieval.

The plunger mechanism of the square baler requires a considerable amount of energy to cut and compress the hay. Typically, the mass of the plunger is augmented by a flywheel connected so that energy from the tractor during the non-compressing part of the stroke is stored in the flywheel and then is expended as the plunger compresses the hay. Some older balers including some currently being used by the Amish have a gasoline engine mounted thereon with a belt drive directly driving the flywheel of the baler. Typically balers have the flywheel oriented towards the front of the baler with the PTO shaft from the tractor directly driving the flywheel that is then interconnected to the plunger.

Another type of baler in common use today is one that produces large rectangular bales. These larger rectangular bales are many times larger than the smaller bales previously discussed. The baling concept is similar in that the hay is picked up and then compressed in a chamber and then ejected from the back of the baler once the desired size is reached and the twine is secured around the bale.

It is known to use a blower arrangement with large square balers for the purpose of cleaning debris (e.g., chaff) from the knotter assemblies. For example, U.S. Patent No. 7,318,376 discloses a blower arrangement for a large square baler with a large centrifugal fan wheel extending the full working width of the baler. The blower arrangement has a continuous single outlet providing a sheet-like outlet flow over all of the knotter assemblies to keep debris away from this area. The fan wheel of this blower arrangement is heavy and expensive to produce. Moreover, the blower arrangement does not clean other functional areas of the baler away from the knotter assemblies.

Therefore, one object of the invention is to provide a blower arrangement for a baler that more efficiently cleans debris from the knotter table, as well as from other functional areas of the baler.

The object of the invention will be achieved by the teaching of independent claim 1. Further advantageous solutions are described within the subclaims.

Accordingly, a blower arrangement of above mentioned type id disclosed, wherein said housing also including at least one additional outlet configured for directing a remaining portion of the outlet flow toward a different part of a baler.

The present invention provides a blower arrangement with separate fans and corresponding vanes, outlets, etc which split the outlet flow of air into multiple different flow paths. Part of the outlet flow is directed rearward toward the knotter assemblies, and a remaining part of the outlet flow is directed to other selected parts of the baler.

The invention in one form is directed to an agricultural baler including a knotter arrangement and a blower arrangement. The knotter arrangement includes a plurality of knotter assemblies positioned across a working width of the baler. The blower arrangement includes a housing and a plurality of centrifugal fans positioned within the housing. Each fan is associated with a different subset of the plurality of knotter assemblies. The housing is configured to concurrently direct a first portion of a flow from the plurality of fans toward the knotter assemblies, and a second portion of the flow from the plurality of fans toward a different part of the baler.

The invention in another form is directed to a blower arrangement for an agricultural baler. The blower arrangement includes a housing and a plurality of axially aligned centrifugal fans positioned within the housing. The housing includes separate adjacent outlets respectively associated with each of the fans. Each of the adjacent outlets are configured for directing a respective portion of an outlet flow toward at least one knotter assembly. The housing also includes at least one additional outlet configured for directing a remaining portion of the outlet flow toward a different part of the baler.

The above-mentioned and other features and advantages of this invention, and the manner of attaining them, will become more apparent and the invention will be better understood by reference to the following description of an embodiment of the invention taken in conjunction with the accompanying drawings, wherein:
Fig. 1 is a perspective view of a large square baler including an embodiment of a blower arrangement of the present invention;
Fig. 2 is a perspective view of the blower arrangement used in the large square baler of Fig. 1, with the top lid removed;
Fig. 3 is a perspective, sectional view taken along line 3-3 in Fig. 2; and
Fig. 4 is a fragmentary, top perspective view of the large square baler of Fig. 1 with the top housing removed from the blower arrangement and knotter arrangement.

Corresponding reference characters indicate corresponding parts throughout the several views. The exemplification set out herein illustrates an embodiment of the invention, in one form, and such exemplification is not to be construed as limiting the scope of the invention in any manner.

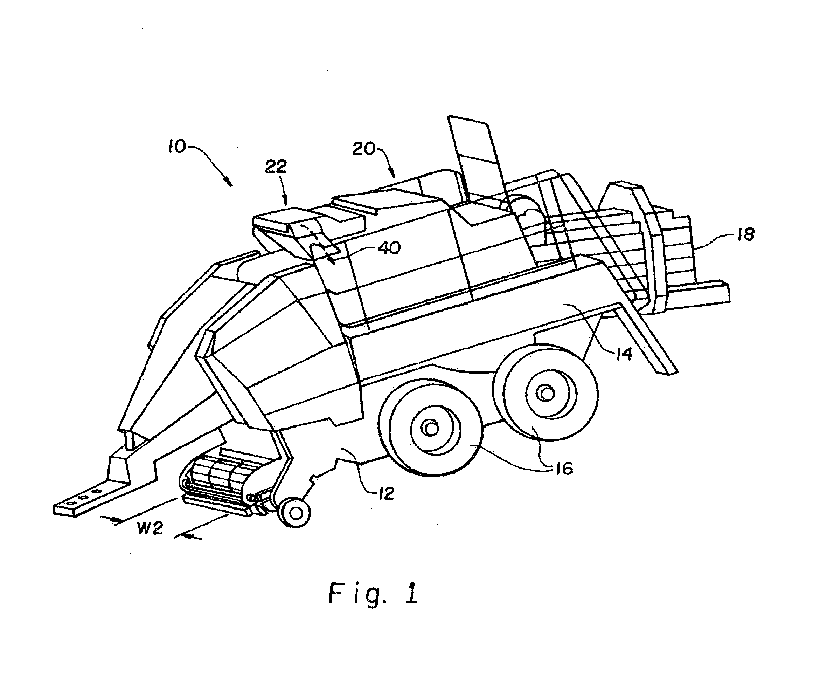

Referring now to the drawings, and more particularly to Fig. 1, there is shown a perspective view of a large square baler 10 including a chassis 12 carrying a number of other structural components, such as a body 14, wheels 16, and discharge chute 18. A knotter arrangement 20 at the top, rear of body 14 houses a knotter table having a predetermined number of knotter assemblies (not visible in Fig. 1). Positioned forward from knotter arrangement 20, also at the top of body 14, is an embodiment of a blower arrangement 22 of the present invention.

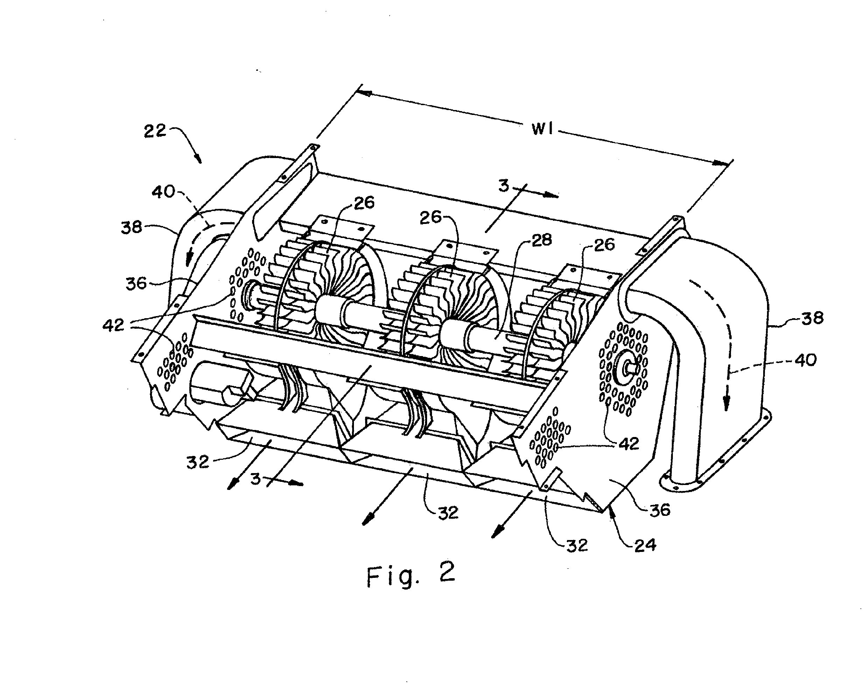

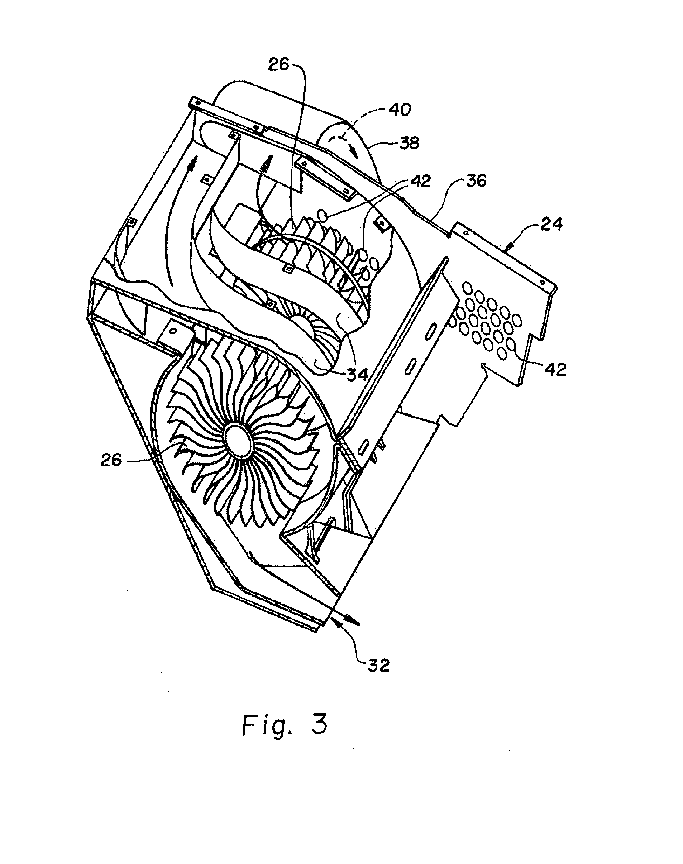

Referring now to Figs. 2 and 3, blower arrangement 22 will be described in greater detail. Blower arrangement 22 includes a housing 24 defining a width W1 corresponding to a working width W2 (Fig. 1) of baler 10. In this instance, the working width W2 of baler 10 corresponds to the width of knotter arrangement 20 as well as the width of discharge chute 18.

A plurality of centrifugal fans 26 are positioned within the housing 24. In the embodiment shown, three centrifugal fans 26 carried by a common input shaft 28 are positioned within housing 24. Each fan 26 is associated with a different subset of the plurality of knotter assemblies 30 within knotter arrangement 20. In the illustrated embodiment, the working width W2 of baler 10 is 4 feet and 6 equidistantly spaced knotter assemblies 30 are provided across the working width W2. Thus, each fan 26 is associated with a subset of two knotter assemblies 30.

More specifically, housing 24 includes separate adjacent outlets 32 which are respectively associated with each of fans 26. Each adjacent outlet 32 directs part of a first portion of an outlet flow from fans 26 in a segmented manner toward the respective subset of knotter assemblies 30 (two knotter assemblies 30 per fan 26, in this instance). Outlets 32 are defined by separate ducts partially surrounding each fan 26 which are positioned within and attached to housing 24. However, outlets 32 may also be integrally formed with housing 24.

Housing 24 also includes internal vanes 34 which direct a second portion of the outlet flow from fans 26 toward a different part of chassis 12. More specifically, referring to Fig. 3, vanes 34 split the second portion of the outlet flow toward the two lateral ends 36 of blower arrangement 22 (half being directed toward the one lateral end 36 as shown in Fig. 3, and mirror image vanes (not shown) directing the other half toward the opposite lateral end 36).

Positioned at each lateral and 36 is a duct 38 which directs the second portion of the outlet flow toward a desired different part of baler 10. Each duct 38 is attached to a corresponding lateral end 36 and receives part of the second portion of the outlet flow through a corresponding opening formed in the associated lateral end 36. In the illustrated embodiment, and as shown by the internal directional arrows 40 in Fig. 1, the second portion of the outlet flow may be directed toward the plurality of twine paths leading to the knotter assemblies 30 to keep debris such as chaff from accumulating in the area of the twine paths. Each duct 38 may be differently configured to direct air toward a different part of baler 10, depending on the application.

Each lateral end 36 of housing 24 includes a plurality of holes 42 defining an inlet for incoming air to fans 26. The number and configuration of holes 42 may vary, depending on the application. In one embodiment, holes 42 are positioned in the generally vertical lateral ends 36 so that less debris is accumulated at the inlet to blower arrangement 22.

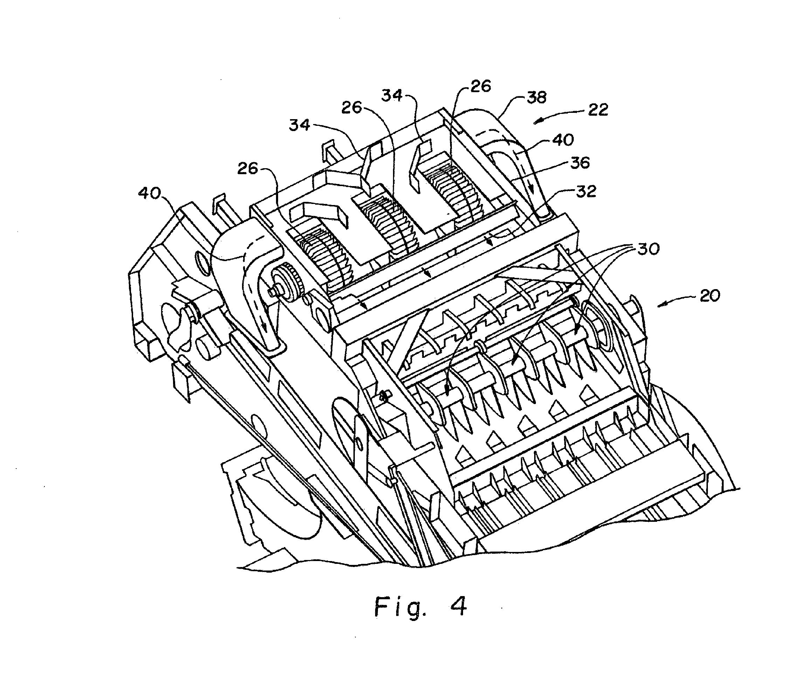

Referring now to Fig. 4, blower arrangement 22 is shown in relation to the plurality of knotter assemblies 30 within knotter arrangement 20. As is shown, the first portion of the outlet flow of air from blower arrangement 22 is directed toward the plurality of knotter assemblies 30.

During operation of baler 10, blower arrangement 22 is driven in any suitable manner such as a belt drive, hydraulic drive, electric drive, etc. Part of the outlet flow from blower arrangement 22 is directed in a segmented manner toward the plurality of knotter assemblies 30 positioned rearward from blower arrangement 22. A remaining portion of the outlet flow from blower arrangement 22 is directed to a different part of baler 10 for use at (e.g., cleaning) a different part of baler 10, such as the twine paths leading to knotter assemblies 30 (air flow directional arrows are shown in Figs. 1 and 5).

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A blower arrangement (22) for an agricultural baler (10), comprising:
a housing (24) and a plurality of axially aligned centrifugal fans (26) positioned within said housing (24), said housing (24) including separate adjacent outlets (32) respectively associated with each of said fans (26), each of said adjacent outlets (32) being configured for directing a respective portion of an outlet flow toward at least one knotter assembly (30), and said housing (24) also including at least one additional outlet configured for directing a remaining portion of the outlet flow toward a different part of a baler (10).

2. The blower arrangement (22) of claim 1, wherein said housing (24) includes at least one generally vertically oriented inlet (42).

3. The blower arrangement (22) of claim 1 or 2, wherein said housing (24) includes opposite end panels (36), each having a respective said inlet (42).

4. The blower arrangement (22) of one of the claims 1 to 3, wherein said housing (24) includes internal vanes (34) which direct the remaining portion of the outlet flow toward opposite lateral ends (36) of the blower arrangement (22).

5. The blower arrangement (22) of one of the claims 1 to 4, including a duct (38) at each said opposite lateral end (36) of the blower arrangement (22) for directing the second portion of the outlet flow.

6. The blower arrangement (22) of one of the claims 1 to 5, wherein each of said fans (26) are carried by a common input shaft (28).

7. An agricultural baler (10), comprising a knotter arrangement (20) including a plurality of knotter assemblies (30) positioned across a working width of said baler (10), **characterized in** further comprising a blower arrangement (22) according to one of the claims 1 to 6 and said housing (24) including the at least one additional outlet configured for directing a remaining portion of the outlet flow toward the different part of the baler (10).

8. The agricultural baler (10) of claim 7, wherein said different part of the baler (12) corresponds to a plurality of twine paths leading to said knotter assemblies (30).

9. The agricultural baler (10) of claim 7 or 8, wherein said housing (24) includes separate adjacent outlets (32) respectively associated with each of said fans (26), each of said adjacent outlets (32) directing part of the first portion of the flow toward a respective one of said subsets of said plurality of knotter assemblies (30).

10. The agricultural baler (10) of one of the claims 7 to 9, wherein said knotter assemblies (30) are equidistantly spaced across the working width.

11. The agricultural baler (10) of one of the claims 7 to 10, wherein said baler (10) is a large square baler.
